# EUROPEAN PATENT APPLICATION

(11) **EP 4 329 169 A1**
(43) Date of publication of application: **28.02.2024**
(21) Application number: 22191747.9
(22) Date of filing: 23.08.2022
(51) Int. Cl.: H02M 1/00, H02M 3/158

(54) **MULTI-LEVEL POWER CONVERTER AUXILIARY CIRCUIT**

(71) Applicant: Collins Aerospace Ireland, Limited, Cork (IE)
(72) Inventor: PEDROSO, Douglas Araujo, Cork, T12 WDN0 (IE); CASTRO ÁLVAREZ, Ignacio, 33202 Gijón (ES)
(74) Representative: Dehns

(57) **Abstract**

A zero voltage transition, ZVT, auxiliary circuit for a multi-level power converter, the ZVT auxiliary circuit comprising: first and second solid state auxiliary switches connected in series across a series connection of an input voltage and an input inductor, and an auxiliary inductor Lₐᵤₓ connected at one end between the first and second solid state auxiliary switches, the other end being arranged to be connected between two switching stages of the multi-level power converter, in use.

## Description

### TECHNICAL FIELD

The present disclosure is concerned with an auxiliary circuit for a power converter and, in particular, for a three-level boost converter.

### BACKGROUND

Power converters are used in many applications to provide an appropriate level of power to drive one or more loads from a power source. The power can be inverted, converted, stepped up or stepped down, as required to drive the loads in question. Typically, a power converter for loads such as electronic devices, electrical vehicles and other loads will include a DC-DC stage to derive appropriate DC drive voltage output levels for the loads to be driven. In recent times, DC power converter or power distribution systems have overtaken AC power distribution systems in many applications e.g. in aircraft applications, especially as the trend has been to more electric aircraft (MEA) or all electric aircraft (AEA), due to their high efficiency and high power density (and thus lower weight and smaller size), among other things.

DC power distribution systems use a DC bus and the converter stage converts the bus voltage into suitable DC voltages for the loads to be driven. Higher and higher bus voltages are becoming possible in many applications, with the possibility of buses in e.g. aircraft applications increasing in the near future from 540 Vdc to 3kVdc. For high power applications, there is a trend to increase the bus voltage to reduce overall losses in the system.

There is an increasing need to design power converters that are smaller and lighter but have improved performance. Increasing the power converter switching frequency leads to smaller device sizes.

Conventionally, PWM power converters operating in switched-mode operation have been used for DC-DC conversion. Operating these converters at high switching frequencies allows for a reduction in component sizes, thus allowing for miniaturisation of the converter. On the other hand, though, greater switching frequency, in these 'hard-switching' designs which have to switch within the turn-on and turn-off times of the switches, leads to increased undesirable voltage and current stresses, poor conversion efficiency and reliability, and high switching losses. Increased heat generation also means that a larger cooling system is required.

More recently, and particularly with advances in semiconductor switching technology, resonant converters have been used to reduce switching losses and improve conversion efficiency. With resonant converters, the active switch device is switched with zero current or zero voltage at its terminals, thus significantly reducing switching losses. This so-called soft switching, or zero-voltage switching (ZVS) enables high frequency switching, which, in turn, allows for miniaturisation, without the switching losses and other problems associated with hard switching converters. An example of a resonant converter is described in US 5,442,540.

Guichao Hua, Ching-Shan Leu, Yimin Jiang and F.C.Y. Lee, 'Novel zero-voltage-transition PWM converters', IEEE Transactions on Power Electronics, vol. 9, no. 2, pp. 213-219, March 1994, doi: 10.1109/63.286814 discusses such ZVT converters and, in particular, their application to a boost converter. A boost converter is a specific type of DC-DC power converter that steps up the voltage to the output. The ZVT circuit is provided as an auxiliary circuit to the boost converter switching stage to provide for soft-switching.

In many converters, power levels can reach very high levels (up to the megawatt level in some cases) and, as mentioned above, the output voltages can also be high. This can result in a requirement for the boost converter to have large and, therefore heavy, inductors and can also adversely affect the power efficiency of the converter. Multi-level boost converters have been proposed which allow the use of smaller inductors and smaller switches, and are configured to provide different output levels depending on the control of the switching stage. A three-level boost converter is discussed in M.T. Zhang, Yimin Jiang, F.C. Lee and M.M. Jovanovic, "Single-phase three-level boost power factor correction converter', Proceedings of 1995 IEEE Applied Power Electronics Conference and Exposition - APEC'95, Dallas, TX, USA, 1995, pp. 434 - 439 vol. 1, doi: 10.1109/APEC.1995.468984. The application of the concept of an auxiliary ZVT circuit to a multi-level circuit, while having advantages in terms of noise reduction and enhancement of performance, does require an auxiliary circuit (i.e. a switch, a diode and an inductor) for each of the main stage switches, which significantly adds to the overall size, weight and complexity of the converter.

There is a need, therefore, for a simplified ZVT auxiliary circuit for a multi-level boost converter.

### SUMMARY

Accordingly, there is provided a zero voltage transition, ZVT, auxiliary circuit for a multi-level power converter, the ZVT auxiliary circuit comprising: first and second solid state auxiliary switches connected in series across a series connection of an input voltage and an input inductor, and an auxiliary inductor Lₐᵤₓ connected at one end between the first and second solid state auxiliary switches, the other end being arranged to be connected between two switching stages of the multi-level power converter, in use.

A power converter and a method of controlling switching of a power converter are also provided.

### BRIEF DESCRIPTION

Examples of a topology for a ZVT auxiliary circuit for a multi-level boost circuit will now be described with reference to the drawings. It should be noted, however, that these are examples only and that variations are possible within the scope of the claims.
Figure 1 shows a known ZVT circuit in a simple boost converter.
Figure 2 shows the extension of the ZVT solution of Fig. 1 extended to a three-level boost converter.
Figure 3 shows a three-level boost converter ZVT implementation according to the disclosure.
Figure 4 shows the main waveforms for illustrating the behaviour of a topology as shown in Fig. 3
Figure 5 illustrates in more detail the part of the waveform of Fig. 4 corresponding to the switching transition.
Figure 6 illustrates in more detail the part of the waveform of Fig. 4 to illustrate the switching period state-plane.

### DETAILED DESCRIPTION

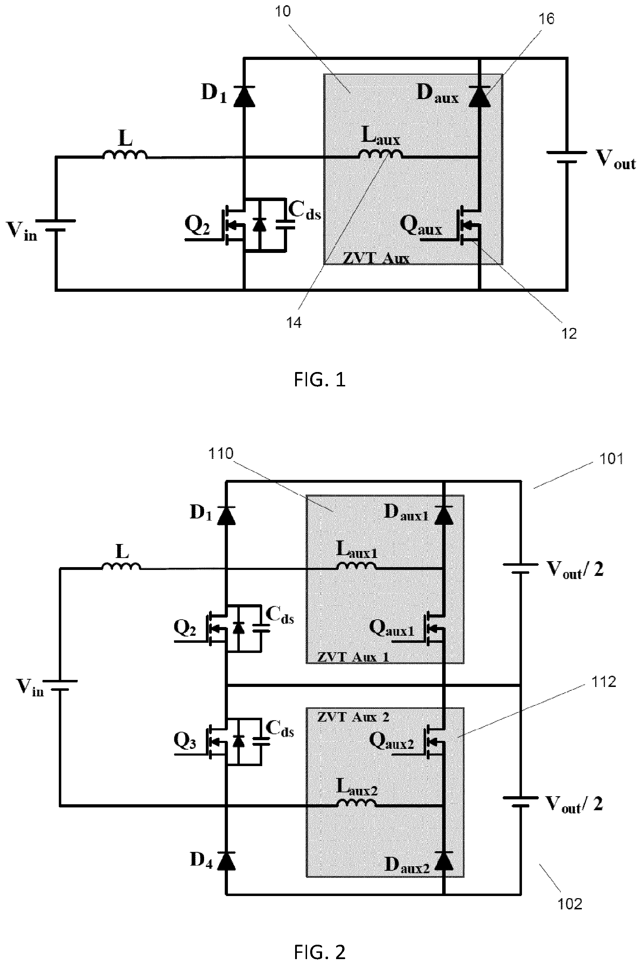

Referring first to Fig. 1, a known ZVT circuit implementation in a boost converter, such as described in Guichao et al mentioned in the background, will be described by way of background.

As mentioned above, in an arrangement such as shown in Fig. 1, the turn-on losses of the converter switches are reduced to zero by using a ZVT auxiliary circuit 10 which discharges the drain-source parasitic capacitances of the switches before they are switched on. The ZVT auxiliary circuit 10 provides an additional resonant network comprising an auxiliary switch 12, a resonant inductor 14 and a diode 16. Such resonant circuits are known and will not be described further here except to say that the operation of the resonant network achieves lossless zero-voltage transition for the switches without increasing voltage and current stresses. The additional auxiliary components of the ZVT circuit do not need to handle the full power of the system and are, therefore, relatively small and, further, because they allow the switching frequency of the converter to be increased, they allow a corresponding reduction in the size of the other converter components. This reduction is greater than the increase in size and weight due to the additional three auxiliary components.

Extending this concept to a three-level boost converter results in a topology as shown in Fig. 2. A three-level boost converter can be considered as two simple boost converters 101, 102 (of the type shown in Fig. 1), each having its own switch and diode, connected in series but 180 degrees out of phase. Applying the concept of Fig. 1, it is expected that the three-level boost converter would have a ZVT auxiliary circuit 110, 112 for each of the boost converters 101, 102. Each converter contributes half of the overall output voltage. The power density of the three-level boost converter is significantly better than the single level boost converter, since for one power inductor, the converter effectively has twice the switching frequency. For the same operating point, the three-level boost converter therefore presents a smaller inductor without penalising the losses and temperature in the power switches.

Whilst this design would appear to have many advantages, there is still a desire to further reduce the overall size and weight of the system whilst maintaining the benefits of a ZVT circuit and a three-level (or more) boost converter.

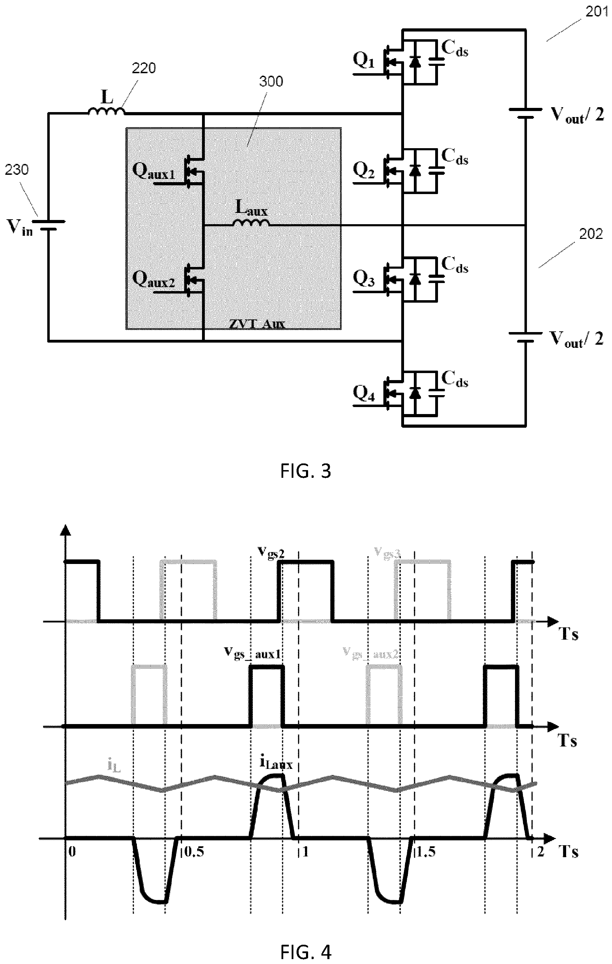

The improvement provided by this disclosure is illustrated in Fig. 3 which, again, has two power converter switching stages 201, 202, connected in series, each having two switches Q1, Q2, Q3, Q4, and a common power inductor 220 and input voltage 230. In this example, the switching stage comprises two semiconductor switches (e.g. MOSFETS) rather than a switch and a diode as in Figs. 1 and 2. Rather than each converter switching stage having its own ZVT auxiliary stage, however, the boost converter has a single ZVT auxiliary circuit 300 common to both converter switching stages 201, 202. The ZVT auxiliary circuit 300 comprises two auxiliary switches Qₐᵤₓ₁ and Qₐᵤₓ₂ connected to each other in series and connected across the input voltage 230, the common power inductor 220 and an auxiliary inductor Lₐᵤₓ connected from the mid-point of the auxiliary switches and the mid-point of the converter switching stages 201, 202. Switch Q1 is complementary to switch Q2 and switch Q4 is complementary to Q3 and so the operation of the ZVT circuit through the auxiliary switches is synchronised to the operation of switches Q2 and Q3. This operation allows the topology to be designed without diodes and with only a single inductor, which significantly reduces the overall size and weight of the circuit, whilst still keeping the same operation stages. The main waveforms for the circuit of Fig. 3 are shown in Fig. 4. At time 0s, switch Q2 is on and switch Q3 is off. When switch Q2 switches off, the current in the power inductor iL begins to drop. The current in the auxiliary inductor drops suddenly when the auxiliary switch switches on. When the power inductor current is at zero, switch Q3 switches on and the auxiliary inductor current rises again and the power inductor current increases.

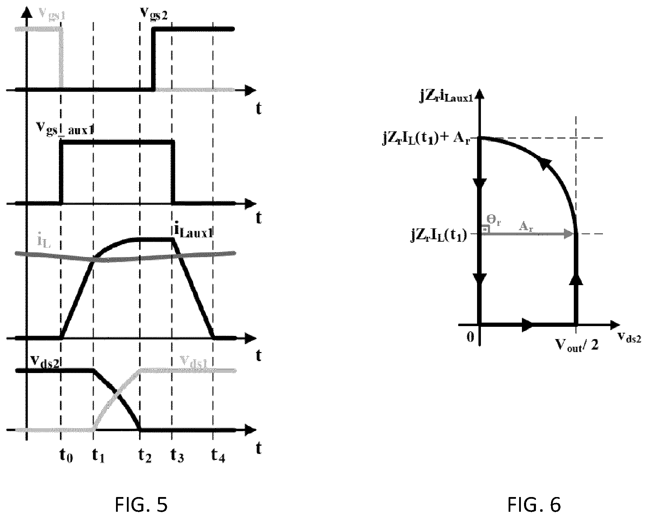

Fig. 4 illustrates the driving signals for the three-level boost converter, which allows the same ZVT circuit to operate for both switching states 201 and 202. Before the turn-on of either Q2 or Q3, the switches Qₐᵤₓ₁ or Qₐᵤₓ₂ will be, respectively, turned on to create the ZVT conditions of the main power switches. The timing for the operation is part of the dead-time defined between the main switches and their complementary switches. The auxiliary switches' Qₐᵤₓ₁ and Qₐᵤₓ₂ turn-on signals are respectively synchronised with the turn-off signals of the switches Q1 and Q4 (shown in detail in Fig. 5). The ZVT circuit operation stages are perfectly symmetrical to both power switching stages 201, 202. Although the auxiliary inductor Lₐᵤₓ current has different signals depending on which main switch is being turned on, the absolute values of the current remain the same and related to the main inductor 220 current.

The zero-voltage transitions are best seen in the detail of Fig. 5. This shows the waveform for turn-on of switch Q2, but corresponding waveforms will apply for turn-on of switch Q3. Fig. 6 represents an entire switching period of the auxiliary inductor's current and drain-source voltage of switch Q2.

Referring again to Fig. 5, at time t₀, switch Q1 is turned off and the auxiliary switch Qₐᵤₓ₁ is turned on. This starts the ZVT operation. Between t₀ and t₁ the auxiliary inductor's current increases linearly until it reaches the same value as the current of the three-level boost inductor's 220 current. In the next stage, from t₂ to t₃, the auxiliary inductor resonates with the capacitances of switches Q1 and Q2, thus discharging V_{ds2} and charging V_{ds1}. The resonance trajectory has a length of ¼ of a circle circumference. The time interval between t₀ and t₂ defines the minimum dead-time possible for correct ZVT operation. At time t₂, when the switch Q2 voltage reaches zero V, its body diode starts to conduct, which causes the current of the auxiliary inductor to be clamped at its peak value. This time interval is only defined by the selected dead-time to completely turn on the switch Q2 with ZVT (plus a safety margin). The final stage starts at t₃, when, after successfully turning on the ZVT operation for the main switch Q2, the auxiliary switch Qₐᵤₓ₁ is turned off. Then, the current of the auxiliary inductor starts to linearly decrease through switches Q4 and Qₐᵤₓ₂ until it reaches a zero current at time t₄. Since the voltage across the auxiliary inductor has the same absolute value at both linear stages, the charge and discharge time slope of the auxiliary inductor will be the same.

Thus, it can be seen that the waveforms for the auxiliary circuit of this disclosure correspond to those that would be achieved using separate ZVT circuits for each boost stage as in Fig. 3 but using far fewer components.

The arrangement of this disclosure therefore provides a ZVT circuit for a multi-level boost converter that allows high frequency switching without noise and also without an increase in the overall size of the converter, and allowing miniaturisation of the boost converter compared to known designs. The circuit can be equally used with analog and digital control.

Practical applications for a boost converter having such a ZVT circuit include battery chargers, but such circuits also provide advantages in many other applications. The improved power density makes the topology attractive for applications such as aerospace where space and weight allowance is limited. Fewer diodes and other components also reduces the number of heat source and so reduces cooling requirements.

## Claims

1. A zero voltage transition, ZVT, auxiliary circuit for a multi-level power converter, the ZVT auxiliary circuit comprising:
first and second solid state auxiliary switches connected in series across a series connection of an input voltage and an input inductor, and an auxiliary inductor Lₐᵤₓ connected at one end between the first and second solid state auxiliary switches, the other end being arranged to be connected between two switching stages of the multi-level power converter, in use.

2. The circuit of claim 1, the first and second solid state auxiliary switches comprising MOSFETs.

3. A multi-level power converter comprising a plurality of switching stages, each comprising two first and second solid state rectifier switches connected in series, and a zero voltage transition circuit as claimed in claim 1 or 2 common to two of said switching stages.

4. The power converter of claim 3, wherein the other end of the auxiliary inductor is connected between the two of said switching stages.

5. The power converter of claim 4, further comprising the input voltage and the input inductor.

6. The power converter of claim 3, 4 or 5, being a three level power converter having two switching stages.

7. The power converter of any of claims 3 to 6, the first and second solid state rectifier switches each comprising a MOSFET.

8. The power converter of any of claims 3 to 7, being a boost converter.

9. The power converter of any of claims 3 to 8, wherein the series connection of the input voltage and the input inductor is connected from a mid-point between the first and second solid state switches of a first switching stage and a mid-point between the first and second solid state switches of a second switching stage, and wherein the auxiliary switches of the ZVT auxiliary circuit are connected across the mid-point between the first and second solid state switches of the first switching stage and the mid-point between the first and second solid state switches of the second switching stage, with the other end of the inductor connected at a mid-point between the first switching stage and the second switching stage.

10. The power converter of claim 9, wherein the second solid state switches are complementary to the first solid state switches for each of the first and the second switching stage, and wherein turn-on signals of the first and second solid-state auxiliary switches are respectively synchronised with turn-off signals of one solid-state switch of each switching stage.

11. The power converter of any of claims 3 to 10 being part of a power control circuit of an aircraft.

12. A method of controlling the switching of a multiple-level power converter, the method comprising turning on the first and second solid state auxiliary switches of any of claims 1 and 2, synchronised with turn-off signals of a switch of each switching stage of the power converter, for ZVT operation of the switches of the switching stages.

13. The method of claim 1 for controlling the switching of a three-level boost power converter.
